# EUROPEAN PATENT SPECIFICATION

(11) **EP 2 022 328 B1**
(45) Date of publication and mention of the grant of the patent: **20.07.2011**
(21) Application number: 08161900.9
(22) Date of filing: 06.08.2008
(51) Int. Cl.: A01K 81/00

(54) **Rubbers-gun for underwater fishing**
Harpune zum Unterwasserfischen
Fusil harpon pour pêche sous-marine

(30) Priority: 08.08.2007 IT GE20070077
(43) Date of publication of application: 11.02.2009
(73) Proprietor: Mares S.p.A., 16035 Rapallo GE (IT); 4 Ocean Design D.o.o., 1000 Ljubljana (SI)
(72) Inventor: Robinik, Maks, SI-6000, KOPER (SI)
(74) Representative: Porsia, Attilio

(56) References cited:
- FR-A- 862 766
- FR-A1- 2 758 878
- FR-A1- 2 795 813
- FR-A1- 2 877 185
- FR-A5- 2 148 716
- GR-B- 1 002 577
- US-A- 3 265 054

## Description

This invention relates to a rubbers-gun for underwater fishing.

As is known, the rubbers-guns for underwater fishing, known as "arbaletes", comprise a tubular shaft the front end of which bears a head with the means for retaining the rubbers, the rear end of which is connected to a grip bearing the means of retention and release of the rear end of the spear. Such guns are very often fitted with a reel for winding the spear retrieval line.

There are various problems with the known rubbers-guns including problems guiding and supporting the line and spear and balancing problems which can compromise precision during the aiming and spear firing operations; water tightness problems inside the tubular shaft which inevitably occur with time because of the wear of the water tight sealing means at the two ends of this shaft, and others.

From FR 2 795 813 A1 a process for the manufacture of a rubbers-gun for underwater fishing is known, comprising the steps of:
a) placing longitudinally on a tubular member actin as a mould a an element provided with a longitudinal slot apt to act as sliding guide for the spear of the gun;
b) winding around this ensemble, a fabric, generally made from carbon, pre-impregnated with a thermosetting substance, which is apt to form the shaft of the gun;
c) subjecting the ensemble thus formed to the action of a source of heat which is apt to cure said thermosetting substance.

By this process it is only possible to confer to the shaft very limited shapes should one intend to extract the internal mould from the moulded shaft at the end of the moulding operation.

The purpose of this invention is therefore to get round the problems mentioned above in rubbers-guns for underwater fishing and realize a rubbers-gun with excellent floatability, and which is very strong and stable with reduced weight at the same time.

This aim is achieved by this invention by realizing the shaft of the gun according to claim 1 by means of a gas injection moulding process using polyamide reinforced with glass fibres as the material. In this way a shaft is obtained with a maximum rigidity associated with a minimum weight, to which it is possible to confer any desired form.

In particular, it is possible along the top of this shaft to realize a first longitudinal spear guide groove while along the bottom of the same it is possible to obtain a second longitudinal groove in which the spear retrieval line is guided.

According to a further aspect of this invention, the gun shaft, its head and the grip are all realized in thermoplastic material and can be integrated with each other to obtain a practically monolithic gun.

According to a further characteristic of this invention, this gun can be provided with a reel, and the support of this reel is advantageously realized in such a way as to easily and conveniently vary the inclination of the reel vis-a-vis the gun shaft.

According to a further characteristic of this invention, the gun shaft has a characteristic rhomboid section with the side edges sharpened in such a way as to favour the maximum training of the weapon itself.

According to a further characteristic of this invention, the head of the gun has a seat for inserting a small lead weight in order to provide the gun with virtually ideal balancing and therefore positioning in water.

Further characteristics and advantages of this invention will be better understood in the course of this description, considered as exemplificative and not limitative and referring to the attached drawings, in which:
- fig. 1 is a side elevation view of a rubbers-gun for underwater fishing according to this invention in which a spear in the shooting position is also indicated by a dot-dash line;
- fig. 2 illustrates a view from above of the gun shaft of fig. 1;
- fig. 3 illustrates a front view and a section view of the middle part of the gun shaft of fig. 1; and
- fig. 4 illustrates a side elevation and larger-scale view of the part of the reel mounted on the gun of fig. 1, is a second position inclined at a certain angle compared with the gun shaft.

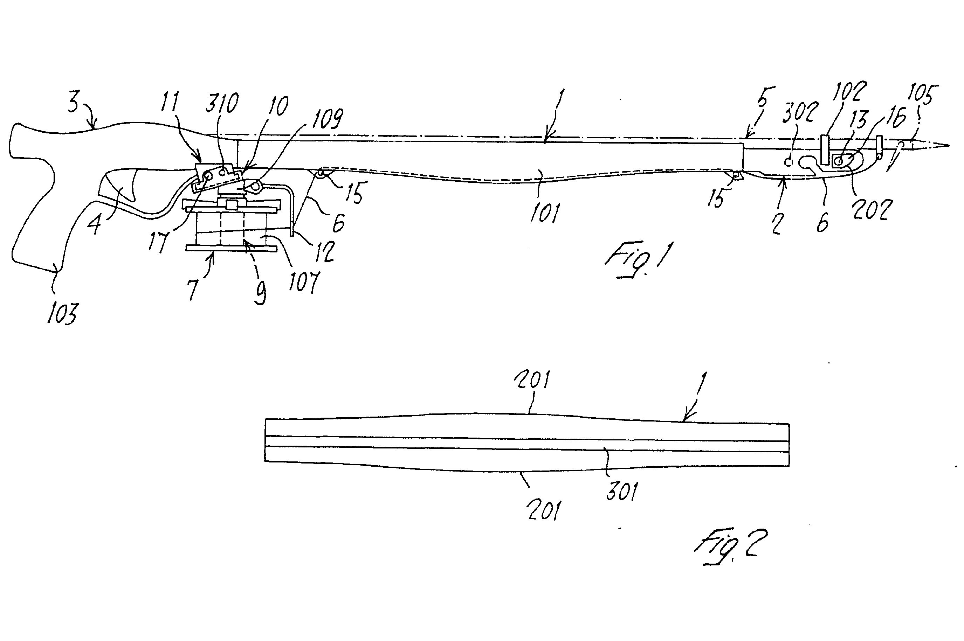

With reference to the drawings and to fig. 1 of the same in particular, 1 indicates the shaft of the rubbers-gun according to this invention. This shaft 1 bears a head 2 at the front and, at the rear, a body 3 with a grip 103 with system control trigger 4 (not illustrated) for engaging/releasing the spear 5. Placed in a longitudinal groove 301 obtained in the top part of the shaft 1 is a spear 5, the front part of which is guided by a guide element 102 obtained in the said head 2. The propulsion of the spear 5 is obtained by means of one or more rubbers (not illustrated) which are inserted, for example, with their intermediate side bent in U-form in the slot 302 of the head 2, while their free ends are joined by a metal tie which is inserted in the notches of the spear 5 in a completely usual manner. Secured to the spear 5 by means of a hole in the spear itself or by means of a sliding ring is one end of a line 6 for retrieving this spear 5. This line 6 is wound at the other end and in several passes around the spool 107 of a reel 7, illustrated in a substantially horizontal position, in other words with the axis of rotation perpendicular to the shaft 1 of the gun. A pin 9 for the rotation of the spool 107 is illustrated inside and in the centre of the same. This pin comprises a top part 109 with a larger section fixed or obtained in a piece with a plate 10, connected in a removable manner, as will be described below, with a support element 11 with a certain inclination vis-à-vis a generic horizontal direction and fixed below to the body 3 in a front position vis-à-vis the trigger 4. A line 6 guide element 12 can be fixed to the top part 109 of the pin 9 for the purposes of guiding the line in an optimal manner when it is wound and unwound around the reel 7. A cavity 202 is obtained in the head 2 and a lead weight 16 for balancing the gun is housed in it. Thanks to this lead weight 16 it is possible to optimize the balancing of the gun especially during its use.

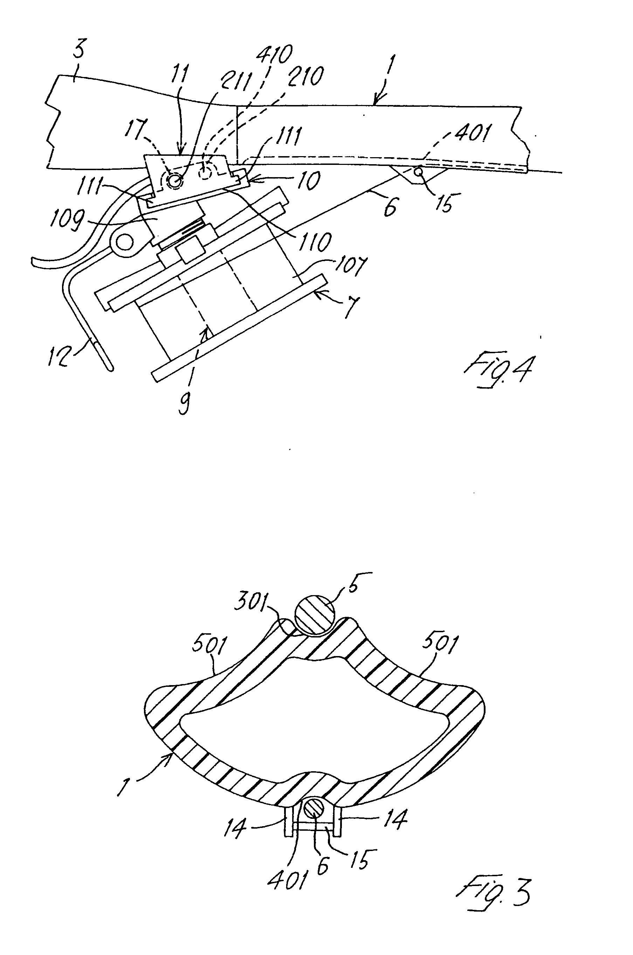

The shaft 1 is entirely hollow - see figs 2 and 3 in the attached drawings - and the cross section of its profile is substantially rhomboid. It is made of thermoplastic material reinforced with glass fibres by means of a moulding technology known per se and called GIT (Gas Injection Technology). It substantially consists of injecting an inert gas, normally nitrogen, into the cavity of a mould already partially filled with thermoplastic material: the action of the gas completes the filling of the mould, by moulding the thermoplastic material and, at the same time, creating a cavity inside the same. The convexities 101 and 201 of the shaft 1 improve the hydrodynamic properties of the gun herein. Obtained on the top of the shaft 1 is a first longitudinal groove 301 for guiding and supporting the spear 5, while obtained on the bottom of the same is a second longitudinal groove 401 for guiding the line 6. Fins 14 between which a pin 15 supporting the spear 5 retrieval line 6 is housed are obtained on the bottom of this shaft 1 at the sides of this groove 401. For example, see fig. 1 where two pins 15 have been obtained below the shaft 1 for supporting the line 6, one in correspondence with and downstream from the element 12 for guiding and relaying the line and one in correspondence with the front end of the shaft 1. As well as the bottom convexity 101 and the symmetrical side convexities 201, the shaft 1 also has two hollows 501 which are symmetrical with regard to the longitudinal centreline axis of the shaft 1. These hollows 501 are obtained over the complete extension of the shaft 1 and are suitable for housing the two branches of the spear 5 propulsion rubber/s. By means of the use of this GIT moulding technology, the head 2, the body 3 and the grip 103 of the gun herein can be integrated with the shaft 1 of the gun, advantageously avoiding the use of seals and means of connection of this head and this body with this gun shaft 1. The costs for making the gun, the possibility of realization errors, and the possibilities of malfunctions during use are notably reduced by means of this integration and the balancing of the gun in the water is notably improved. A polyamide, for example the polyamide PA66, reinforced with glass fibres is preferably used for realizing this gun.

The reel 7 around which the spear retrieval line is wound in several passes can assume two positions, namely a first horizontal position illustrated in fig. 1, and therefore with the axis of rotation perpendicular to the direction of the shaft 1, and a position inclined at a certain acute angle vis-à-vis this shaft 1, as illustrated in fig. 4.

As has been said, this reel 7 comprises the spool 107 fixed at the centre of which is the pin 9 for the rotation of this spool 107 by means, for example, of appropriate snap means. The support 11 fixed to the body 3 comprises, at a certain height, a through-hole 211 and a base which is inclined and bears two fins 111 protruding from this support 11. The plate 10, connected to the top section 109 of the pin 9, comprises a seat 110 for engaging the base of the support 11 provided with these fins 111 protruding laterally. This seat 110 is closed on one side by a side wall 210 with two through-holes 310 and 410, each of which is suitable for aligning itself in relation to the horizontal or inclined position assumed by the reel 7, with the through-hole 211 of the support 11. Considering fig. 1, with the reel 7 in the horizontal position, the seat 110 of fig. 4 of the plate 10 is engaged, on one side in relation to the gun, at the base with protruding fins 111 of the support 11 in such a way that the through-hole 410 of the side wall 210 is aligned with the through-hole 211 of the support: the fixing pin 17 is then inserted into these aligned through-holes 410 and 211. To pass to the inclined position of fig. 4 of the reel 7, it is necessary above all to remove the spool 107 from the rotation pin 9 fixed to the plate 10, remove the pin 17 and take the plate 10 off the fins 111 protruding from the base of the support 11. At this point the engagement seat 110 of the said plate 10 is always inserted on said base with protruding fins 111 of the support 11 but on the other side of the gun compared with what has been seen in the description of the reel 7 horizontal position. In this case, the through-hole 211 of this support 11 is aligned with the through-hole 310 of the side wall 210 of the plate 10 and the fixing pin 17 is inserted into these aligned holes. At this point it is possible to insert the spool 107 of the reel 7 in the associated rotation pin 9 once again.

## Claims

1. Rubbers-gun for underwater fishing, comprising a shaft (1) provided at the front with a head (2) and at the rear with a body (3) with a grip (103) and provided with means for retaining and releasing a spear (5) **characterized in that** the shaft of the gun is made of polyamide reinforced with glass fibres by means of a gas injection moulding process.

2. Rubbers-gun according to Claim 1, **characterized in that** the cross-section profile of the shaft (1) of the gun is rhomboid, tapered from the centre towards the two ends.

3. Rubbers-gun according to the preceding Claims 1 and/or 2, **characterized in that** a first spear (5) support and guide longitudinal groove (301) is obtained on the top of the said shaft (1) and substantially along its full extension while obtained in the bottom of the same is a second longitudinal groove (401) in which a line (6) for retrieving the said spear (5) is guided.

4. Rubbers-gun according to claim 3, **characterized in that** it comprise further means (14, 15) for guiding the said line (6) which are positioned at the sides of the said second longitudinal groove (401).

5. Gun according to Claim 1, **characterized in that** the said head (2) is made of thermoplastic material.

6. Gun according to Claim 1, **characterized in that** the said body (3) bearing the grip (103) is made of thermoplastic material.

7. Gun according to Claim 1, **characterized in that** the said shaft (1) is entirely hollow, and is plugged at both ends by integrated plugs made of thermoplastic material.

8. Gun according to Claim 1, **characterized in that** the said head (2) comprises a cavity (202) for housing a lead balancing weight (16).

9. Gun according to one or more of the preceding claims, **characterized in that** it comprises a reel (7) connected to the said body (3) by means (10, 11) that permit an initial positioning horizontally of it to the said shaft (1), therefore with the axis of rotation substantially perpendicular to the shaft (1), and a second positioning inclined at a certain angle compared with the said shaft (1).

10. Gun according to Claim 9, **characterized in that** the said reel (7) comprises an element (12) for guiding and relaying the line (6).

11. Gun according to Claim 9, **characterized in that** the said reel (7) comprises a spool (107) provided with a rotation pin (9) with a top part (109) connected to a plate (10) provided with a seat (110) for engaging the base of a support element (11) fixed to the said body (3), the said base being inclined and provided at the sides with fins (111) protruding from the said support element (11) and suitable for engaging itself in the said seat (110) for engaging the plate (10).

12. Gun according to Claim 11, **characterized in that** the said plate (10) comprises on one side a side wall (210) provided with at least two through-holes (310, 410) suitable for aligning themselves alternately, in relation to the horizontal or inclined position assumed by the said reel (7) with at least one through-hole (211) obtained in the said support element (11), there being an unmovable pin (17) for fixing the said plate (10) with the said support element (11) inserted in the said aligned holes.

13. Rubbers-gun for underwater fishing according to any of the preceding claims, **characterized in that** the shaft (1) of the gun, its head (2) and the grip (3, 103) are all made of thermoplastic material and can be integrated with each other.

## Patentansprüche

1. Harpune zum Unterwasserfischen mit einem Schaft (1), welcher an einer Vorderseite einen Kopfstück (2) und an einer Rückseite einen Körper (3) mit einem Griff (103) aufweist und der mit Mitteln zum Halten und Auslösen eines Speeres (5) versehen ist, **dadurch gekennzeichnet, dass** der Schaft der Harpune aus Polyamide, verstärkt mit Glasfasern, und durch ein Gasinjektionsschmelzverfahren hergestellt ist.

2. Harpune nach Anspruch 1, **dadurch gekennzeichnet, dass** das Querschnittsprofil des Schaftes (1) der Harpune rhomboid ist und von dem Zentrum zu den zwei Enden spitz zuläuft.

3. Harpune nach einem der vorhergehenden Ansprüche 1 und/oder 2, **dadurch gekennzeichnet, dass** eine longitudinale Rinne (301) zur Abstützung und Führung eines ersten Speeres auf der Oberseite des Schaftes (1) und im Wesentlichen entlang seiner gesamten Ausdehnung angeordnet ist und entlang der Unterseite desselben eine zweite longitudinale Rinne (401) angeordnet ist, in welcher eine Leine (6) zum Zurückholen des Speeres (5) geführt ist.

4. Harpune nach einem der vorhergehenden Ansprüche, **dadurch gekennzeichnet, dass** sie weitere Mittel (14, 15) aufweist, zum Führen der Leine (6), welche an den Seiten der zweiten longitudinalen Rinne (401) angeordnet sind.

5. Harpune nach Anspruch 1, **dadurch gekennzeichnet, dass** das Kopfstück (2) aus einem thermoplastischen Material hergestellt ist.

6. Harpune nach Anspruch 1, **dadurch gekennzeichnet, dass** der Körper (3), welcher den Griff (103) trägt, aus einem thermoplastischen Material hergestellt ist.

7. Harpune nach Anspruch 1, **dadurch gekennzeichnet, dass** der Schaft (1) vollständig hohl ist und an beiden Enden mit integrierten Stopfen, die aus thermoplastischen Material hergestellt sind, zugestopft sind.

8. Harpune nach Anspruch 1, **dadurch gekennzeichnet, dass** das Kopfstück (2) einen Hohlkörper (202) zur Aufnahme eines ausbalancierten Bleigewichts (16) aufweist.

9. Harpune nach einem der vorhergehenden Ansprüche, **dadurch gekennzeichnet, dass** sie eine Rolle (7) aufweist, die mit dem Körper (3) durch Mittel (10, 11) verbunden ist, welche eine anfängliche Positionierung erlauben, bei der sie horizontal zu dem Schaft (1) positioniert ist, wobei die Rotationsachse im Wesentlichen senkrecht zum Schaft (1) steht und eine zweite geneigte Position in einem bestimmten Winkel, bezogen auf den Schaft, ermöglicht.

10. Harpune nach Anspruch 9, **dadurch gekennzeichnet, dass** die Rolle (7) ein Element (12) aufweist, zum Führen und Umlenken der Leine (6).

11. Harpune nach Anspruch 9, **dadurch gekennzeichnet, dass** die Rolle (7) eine Spule (107) aufweist, die mit einem Rotationsstift (9) mit einem Oberteil (109) verbunden mit einer Platte (10) ist, die mit einer Aufnahme (110) versehen ist, zum Koppeln des Fußes des Auflageelements (11), welches mit dem Körper (3) verbunden ist, wobei der Fuß geneigt ist und an der Seite mit Rippen (111) versehen ist, welche von dem Auflageelement (11) herausragen und geeignet sind, zum Selbstkoppeln mit der Aufnahme (110) zum Koppeln der Platte (10).

12. Harpune nach Anspruch 11, **dadurch gekennzeichnet, dass** die Platte (10) an einer Seite eine Seitenwand (210) aufweist, mit zumindest zwei Durchgangsbohrungen (310, 410), die geeignet sind, im Verhältnis zu der horizontalen oder geneigten Position, welche durch die Rolle (7) angenommen wird, alternierend zueinander zu fluchten mit zumindest zwei Durchgangsbohrungen (211), die im Aufnahmeelement (11) angeordnet sind, wobei ein unbeweglicher Stift (17) zur Fixierung einer Platte (10) mit dem Aufnahmeelement (11), in eines der fluchtenden Löcher eingesetzt ist.

13. Harpune zum Unterwasserfischen nach einem der vorhergehenden Ansprüche, **dadurch gekennzeichnet, dass** der Schaft (1) der Harpune, sein Kopfstück (2) und der Griff (3, 103) aus thermoplastischem Material hergestellt sind und miteinander verbaut werden können.

## Revendications

1. Fusil harpon pour pêche sous-marine, comprenant un fût (1) muni à l'avant d'une tête (2) et à l'arrière d'un corps (3) ayant une poignée (103) et muni de moyens pour retenir et relâcher un harpon (5), **caractérisé en ce que** le fût du fusil est fait de polyamide renforcé par des fibres de verre au moyen d'un procédé de moulage par injection de gaz.

2. Fusil harpon suivant la revendication 1, **caractérisé en ce que** le profil en section transversale du fût (1) du fusil est rhomboïde, en se rétrécissant du centre vers les deux extrémités.

3. Fusil harpon suivant l'une des revendications précédentes 1 et/ou 2, **caractérisé en ce qu'**une rainure (301) longitudinale de guidage et de support de harpon (5) est obtenue au sommet du fût (1) et sensiblement le long de toute son étendue, tout en obtenant au fond de celui-ci une deuxième rainure (401) longitudinale, dans laquelle est guidée une ligne (6) de récupération du harpon (5).

4. Fusil harpon suivant la revendication 3, **caractérisé en ce qu'**il comprend, en outre, des moyens (14, 15) pour guider la ligne (6), qui sont positionnés sur les côtés de la deuxième rainure (401) longitudinale.

5. Fusil suivant la revendication 1, **caractérisé en ce que** la tête (2) est en une matière thermoplastique.

6. Fusil suivant la revendication 1, **caractérisé en ce que** le corps (3) portant la poignée (103) est en une matière thermoplastique.

7. Fusil suivant la revendication 1, **caractérisé en ce que** le fût (1) est entièrement creux et est bouché aux deux extrémités par des tampons intégrés en matière thermoplastique.

8. Fusil suivant la revendication 1, **caractérisé en ce que** la tête (2) comprend une cavité (202) pour loger une masselotte (16) d'équilibrage en plomb.

9. Fusil suivant l'une ou plusieurs des revendications précédentes, **caractérisé en ce qu'**il comprend un moulinet (7) relié au corps (3) par des moyens (10, 11), qui permettent une mise en position initiale horizontalement de celui-ci par rapport au fût (1), en ayant donc l'axe de rotation sensiblement perpendiculaire au fût (1) et une deuxième mise en position inclinée d'un certain angle par rapport au fût (1).

10. Fusil suivant la revendication 9, **caractérisé en ce que** le moulinet (7) comprend un élément (12) pour guider et relayer la ligne (6).

11. Fusil suivant la revendication 9, **caractérisé en ce que** le moulinet (7) comprend une bobine (107) munie d'une broche (9) de rotation ayant une partie (109) de sommet reliée à une plaque (10) munie d'un siège (110) pour coopérer avec la base d'un élément (11) de support fixé au corps (3), la base étant inclinée et munie sur les côtés d'ailettes (111) faisant saillie de l'élément (11) de support et propre à coopérer soi-même dans le siège (110) pour coopérer avec la plaque (10).

12. Fusil suivant la revendication 11, **caractérisé en ce que** la plaque (10) comprend d'un côté une paroi (210) latérale munie d'au moins deux trous (310, 410) traversants propres à s'aligner eux-mêmes en alternance, en relation avec la position horizontale ou inclinée prise par le moulinet (7), avec au moins un trou (211) traversant ménagé dans l'élément (11) de support, une broche (17) inamovible étant prévue pour immobiliser la plaque (10) avec l'élément (11) de support inséré dans les trous alignés.

13. Fusil harpon pour la pêche sous-marine suivant l'une quelconque des revendications précédentes, **caractérisé en ce que** le fût (1) du fusil, sa tête (2) et la poignée (3, 103) sont tous en une matière plastique et peuvent être intégrés les uns aux autres.
